# EUROPÄISCHE PATENTSCHRIFT

(11) **EP 0 962 366 B1**
(45) Veröffentlichungstag und Bekanntmachung des Hinweises auf die Patenterteilung: **27.11.2002**
(21) Anmeldenummer: 99109369.1
(22) Anmeldetag: 01.06.1999
(51) Int. Cl.: B60R 22/34

(54) **Baugruppe bestehend aus mindestens zwei Torsionsstäben zur Kraftbegrenzung bei einem Gurtaufroller**
Assembly comprising at least two torsion bars for limiting the force on a safety belt retractor
Ensemble comprenant au moins deux barres de torsion pour limiter la force sur un enrouleur de ceinture

(30) Priorität: 04.06.1998 DE 29810005 U; 14.04.1999 DE 29906629 U
(43) Veröffentlichungstag der Anmeldung: 08.12.1999
(73) Patentinhaber: TRW Occupant Restraint Systems GmbH & Co. KG, 73553 Alfdorf (DE)
(72) Erfinder: Wier, Franz, 73571 Göggingen (DE)
(74) Vertreter: Sties, Jochen, Dipl.-Ing.

(56) Entgegenhaltungen:
- WO-A-96/32303
- WO-A-97/49583
- DE-A- 19 653 510
- DE-C- 19 733 787
- US-A- 3 857 528
- US-A- 5 522 564

## Beschreibung

Die Erfindung betrifft eine Baugruppe bestehend aus mindestens zwei Torsionsstäben zur Kraftbegrenzung bei einem Gurtaufroller gemäß dem Oberbegriff des Anspruchs 1 bzw. des Anspruchs 2.

Eine solche Baugruppe ist aus der gattungsgemäßen DE-A-196 53 510 und der EP-A-895 906 bekannt. Hier werden zwei Torsionsstäbe eingesetzt, wobei einer der Torsionsstäbe hohl und der zweite Torsionsstab im Inneren des ersten Torsionsstabs angeordnet ist. Diese Baugruppen ermöglicht es, daß beispielsweise bei einem Unfall Gurtband von dem Gurtaufroller entgegen einer vorbestimmten Widerstandskraft abgezogen werden kann, wodurch Belastungsspitzen im Sicherheitsgurt und sich die dadurch ergebenden Risiken einer Verletzung des zurückzuhaltenden Fahrzeuginsassen verringern lassen. Die dem Abziehen des Gurtbandes entgegenwirkende Widerstandskraft wird bestimmt von dem jeweils wirkenden Torsionswiderstandsmoment. Dieses kann an die jeweiligen Anforderungen angepaßt werden, indem entweder alternativ der eine oder der andere Torsionsstab oder kumulativ beide Torsionsstäbe aktiviert werden.

Nachteilig bei dem bekannten Gurtaufroller ist, daß zum Variieren der sich ergebenden Kennlinie von Widerstandskraft über der Länge des abgezogenen Gurtbandes ein aufwendiger und voluminöser Mechanismus erforderlich ist, der mit der notwendigen Sicherheit die verschiedenen Torsionsstäbe in der gewünschten Weise schaltet.

Die Aufgabe der Erfindung besteht darin, eine Baugruppe zur Kraftbegrenzung bei einem Gurtaufroller zu schaffen, bei der die sich ergebende Kennlinie von Gurtbandabzugskraft über der Länge des abgezogenen Gurtbandes in der gewünschten Weise variiert ohne daß hierfür aufwendige externe Steuermechanismen zum Schalten erforderlich sind.

Zu diesem Zweck sind bei einer Baugruppe der eingangs genannten Art die Merkmale des Ansprüche 1 bzw. 2 vorgesehen. Ein hohler Torsionsstab neigt dazu, bei höheren Belastungen sich einzuschnüren oder vollständig zu kollabieren. Somit läßt sich z.B. ein Abscheren des äußeren Torsionsstabes, ein vorbestimmtes und begrenztes Einschnüren des ersten Torsionsstabes oder ein vorbestimmtes Verkürzen des ersten Torsionsstabes, hervorrufen das dazu benutzt werden kann, ihn aus einer anfänglich zur Kraftübertragung dienenden Aufnahme herauszuziehen, so daß er nicht mehr an der Drehmomentübertragung beteiligt ist.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Fig. 1 in einer Schnittansicht einen Gurtaufroller mit einer erfindungsgemäßen Baugruppe;
- Fig. 2 in einer Schnittansicht eine Baugruppe gemäß einer ersten Ausführungsform der Erfindung;
- Fig. 2a in einer perspektivischen Ansicht eine Baugruppe gemäß einer zur Ausführungsform von Fig. 2 alternativen Ausführungsform;
- Fig. 3 ein Diagramm einer Kennlinie der Baugruppe gemäß der ersten Ausführungsform;
- Fig. 4 in einer Schnittansicht eine Baugruppe gemäß einer zweiten Ausführungsform der Erfindung;
- Fig. 5 in einer schematischen Draufsicht ein axiales Ende der in Fig. 4 gezeigten Baugruppe;
- Fig. 6 in einer Schnittansicht eine Baugruppe, die nicht Gegenstand der Erfindung ist.
- Fig. 7 in einer Schnittansicht eine Baugruppe, die nicht Gegenstand der Erfindung ist.
- Fig. 8 ein Diagramm einer Kennlinie der Baugruppe gemäß Figur 7;
- Fig. 9 in einer Schnittansicht eine Baugruppe, die nicht Gegenstand der Erfindung ist.
- Fig. 10 eine Kennlinie der Baugruppe gemäß Figur 9;
- Fig. 11 in einer Schnittansicht eine Baugruppe, die nicht Gegenstand der Erfindung ist.
- Fig. 12 eine Kennlinie der Baugruppe gemäß Figur 11;
- Fig. 13 in einer Schnittansicht eine Baugruppe gemäß einer dritten Ausführungsform der Erfindung;
- Fig. 14 in einer Schnittansicht eine Variante zur in Fig. 13 gezeigten dritten Ausführungsform;
- Fig. 15 eine Draufsicht auf ein axiales Ende der in Fig. 14 gezeigten Variante; und
- Fig. 16 in einer Seitenansicht einen bei der Baugruppe gemäß der dritten Ausführungsform verwendeten Torsionsstab im tordierten Zustand.

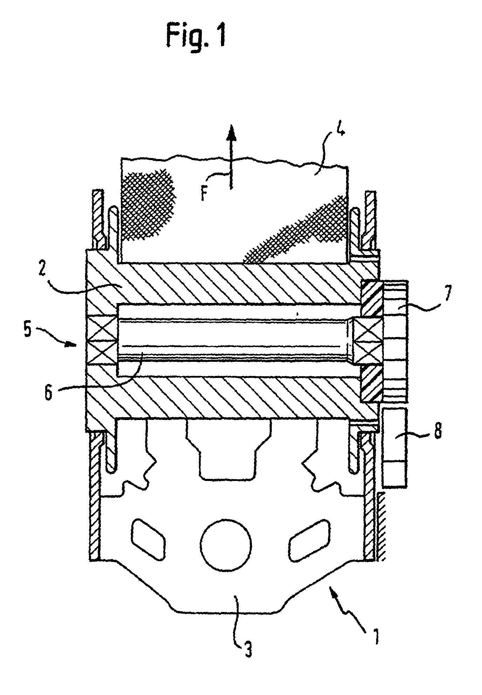

In Fig. 1 ist ein Gurtaufroller 1 gezeigt, der eine Gurtspule 2 enthält, die drehbar in einem Rahmen 3 gelagert ist, der in einem Fahrzeug befestigt werden kann. Auf der Gurtspule 2 ist ein Gurtband 4 aufgenommen, das dazu dienen kann, einen Fahrzeuginsassen bei einem Unfall zurückzuhalten, damit dieser an der Verzögerung des Fahrzeugs teilnimmt. Im Inneren der Gurtspule ist eine Baugruppe 5 angeordnet, die allgemein aus einem Verformungsmittel 6 besteht, das an dem bezüglich Fig. 1 linken Ende drehfest mit der Gurtspule verbunden und an seinem gegenüberliegenden Ende mit einer Sperrverzahnung 7 versehen ist. In die Sperrverzahnung 7 kann eine Sperrklinke 8 in an sich bekannter Weise eingesteuert werden.

Wenn in dem Gurtband 4 eine Zugkraft F wirkt, die auf die Gurtspule 2 ein Drehmoment ausübt, das größcr als ein Widerstandsdrehmoment ist, welches das Verformungsmittel 6 aufbringen kann, wird das Gurtband 4 von der Gurtspule abgezogen, wobei das Verformungsmittel 6 zwischen seinem fest mit der Gurtspule verbundenen Ende und seinem durch die Sperrklinke 8 und die Sperrverzahnung 7 drehfest gehaltenen Ende tordiert wird. Der Aufbau des Verformungsmittels 6 sowie die auf diese Weise erzielbaren Kennlinien von Gurtbandabzugskraft F über der Länge des abgezogenen Gurtbandes wird anhand der folgenden Figuren beschricben.

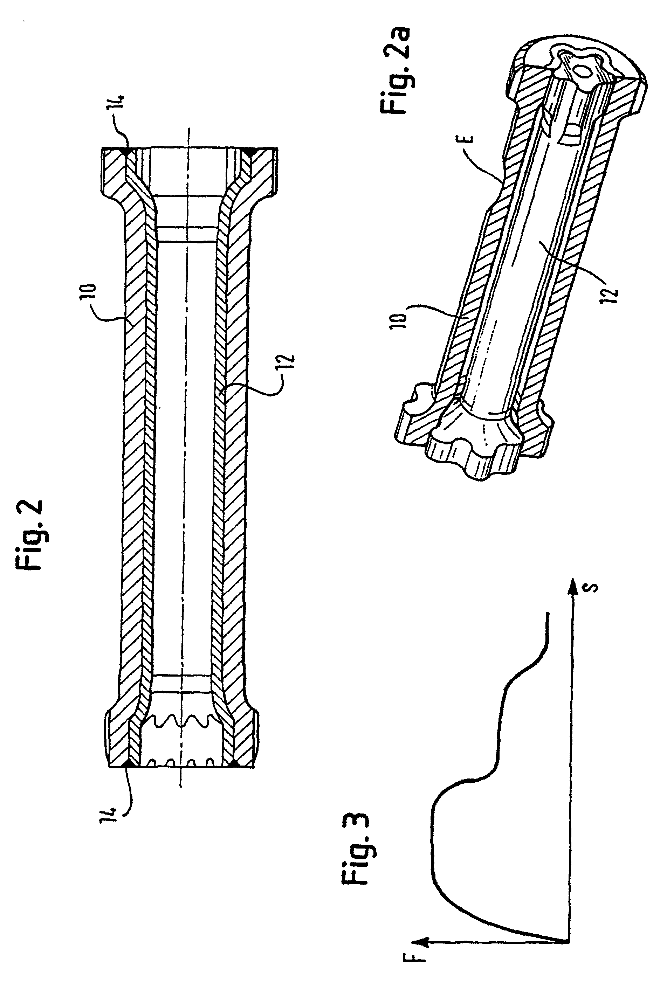

In Fig. 2 ist ein Verformungsmittel gemäß einer ersten Ausführungsform der Erfindung gezeigt. Das Verformungsmittel ist eine Baugruppe, die einen ersten Torsionsstab 10 aufweist, der hohl ausgebildet ist, sowie einen zweiten Torsionsstab 12, der im Inneren des ersten Torsionsstabes angeordnet ist. Die beiden Torsionsstäbe 10, 12 sind sowohl an ihrem ersten axialen Ende, das bezüglich Fig. 2 auf der linken Seite angeordnet ist, und an ihrem zweiten axialen Ende, das bezüglich Fig. 2 auf der rechten Seite angeordnet ist, fest miteinander verbunden. Dies ist hier durch Schweißnähte 14 symbolisiert.

Die oben verwendete Bezeichnung des ersten und des zweiten axialen Endes der beiden Torsionsstäbe wird auch für die weiteren Ausführungsformen beibehalten.

Die von den beiden Torsionsstäben 10, 12 gebildete Baugruppe kann in dem in Fig. 1 gezeigten Gurtaufroller so eingesetzt werden, daß das erste axiale Ende fest mit der Gurtspule und das zweite axiale Ende fest mit der Sperrverzahnung verbunden ist. Die sich dann im Betrieb einstellende Kennlinie von Gurtbandabzugskraft F über der Länge s des abgezogenen Gurtbandes ist in Fig. 3 gezeigt. In einer ersten Phase ergibt sich eine hohe Gurtbandabzugskraft, da hier die beiden Torsionsstäbe parallelgeschaltet sind. Da der zweite Torsionsstab 12 eine geringere Wandstärke hat als der erste Torsionsstab 10, ist die Festigkeit des zweiten Torsionsstabs geringer als diejenige des ersten Torsionsstabes. Somit ist nach einer vorbestimmten Verdrehung zwischen dem ersten und dem zweiten axialen Ende der beiden Torsionsstäbe 10, 12 die Belastungsgrenze des zweiten Torsionsstabes 12 erreicht, und er wird abgeschert. Somit wirkt zwischen dem ersten und dem zweiten axialen Ende lediglich der erste Torsionsstab 10, und das bereitgestellte Widerstandsdrchmoment sinkt ab. Bei fortschreitender Verdrehung zwischen den beiden axialen Enden des Torsionsstabes 10 beginnt dieser, sich nach innen einzuschnüren, wodurch das bereitgestellte Widerstandsdrehmoment weiter absinkt. Somit ergibt sich eine Kennlinie, die drei verschiedene Kraftniveaus zeigt: ein erstes hohes Kraftniveau, bestimmt von den beiden parallelgeschalteten Torsionsstäben, ein niedrigeres zweites Kraftniveau, bestimmt von dem ersten Torsionsstab 10 im unverformten Zustand, und schließlich ein noch niedrigeres drittes Kraftniveau, bestimmt vom Torsionsstab 10 im verformten Zustand.

In Figur 2a ist eine Ausführungsform in Alternative zu der in Figur 2 gezeigten Ausführungsform dargestellt. Hier sind die beiden Torsionsstäbe jeweils mit einem Vielzahnprofil ausgeführt, so daß sie formschlüssig ineinander eingreifen. Der zweite Torsionsstabe 12 ist an einem Ende mit einem kleinen und am anderen Ende mit einem größeren Durchmesser ausgebildet, so daß er in den ersten Torsionsstab eingeschoben werden kann und gleichzeitig mit beiden Enden formschlüssig mit dem ersten Torsionsstab verbunden ist.

Der erste Torsionsstab, der aus Aluminium oder einer Aluminiumlegierung besteht, ist mit einer örtlichen Einschnürung E versehen, so daß es beim Tordieren frühzeitig zu einem Bruch kommt, was zu einer degressiven Kennlinie führt. Der zweite Torsionsstab, der aus Aluminium, einer Aluminiumlegierung oder aus Stahl besteht, kann in Abhängigkeit von der gewünschten Kennlinie als massives oder auch als hohles Teil ausgeführt werden.

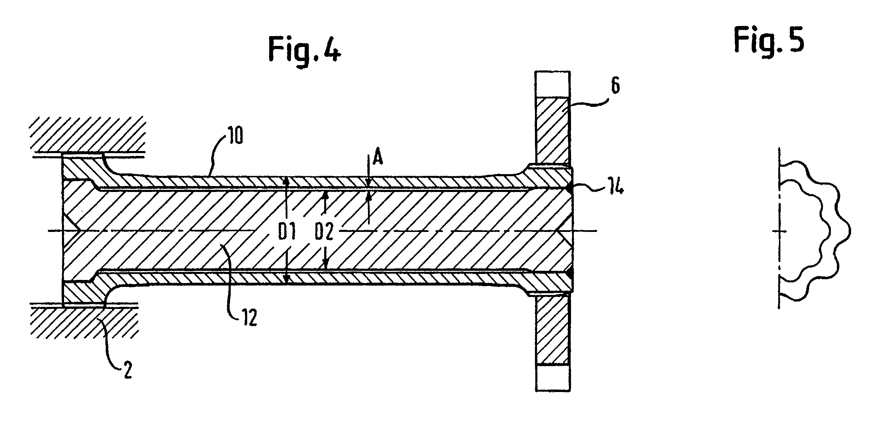

In den Figuren 4 und 5 ist eine Baugruppe gemäß einer zweiten Ausführungsform der Erfindung gezeigt. Diese Ausführungsform entspricht grundsätzlich derjenigen von Fig. 2, wobei jedoch einige Modifikationen vorgesehen sind. Bei dieser Ausführungsform ist der zweite Torsionsstab 12 massiv ausgestaltet und nicht, wie gemäß der ersten Ausführungsform, hohl. Zum Zwecke der Montage wird hier der erste Torsionsstab 10 über den zweiten Torsionsstab 12 geschoben. Am zweiten axialen Ende kann eine Schweißnaht 14 vorgesehen sein, um die Torsionsstäbe miteinander zu verbinden. Ferner ist am zweiten Ende die Sperrverzahnung 6 drehfest angebracht.

Ein weiterer Unterschied zur ersten Ausführungsform besteht darin, daß der erste Torsionsstab 10 nicht unmittelbar auf dem zweiten Torsionsstab aufliegt, sondern daß zwischen der Innenwand des ersten Torsionsstabes 10 und der mit einer Gleitbeschichtung versehenen Außenwand des zweiten Torsionsstabes 12 ein zylindrischer Zwischenraum mit einer Wandstärke A von etwa 0,25 mm vorliegt. Der Außendurchmesser des zweiten Torsionsstabes 12 beträgt bei dieser Ausführungsform etwa 9 mm, und der Außendurchmesscr des ersten Torsionsstabes 10 beträgt etwa 12 mm. Somit ist es bei gemeinsamer Tordierung der beiden Torsionsstäbe möglich, daß der erste Torsionsstab 10 sich verformt, bis er sich an der Außenfläche des zweiten Torsionsstabes 12 abstützt.

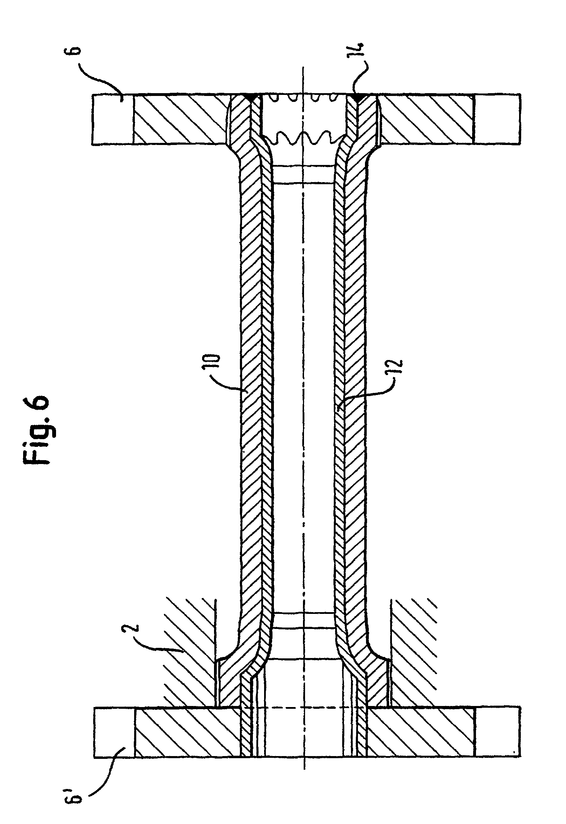

In Fig. 6 ist eine prinzipiell bekannte Baugruppe gezeigt, um das Verständnis der Erfindung zu erleichtem. Auch hier ist der erste Torsionsstab 10 am ersten axialen Ende fest mit der Gurtspule 2 verbunden. Am zweiten axialen Ende des Torsionsstabes 10 ist die Sperrverzahnung 6 vorgesehen. Außerdem ist der zweite Torsionsstab 12 am zweiten axialen Ende fest mit dem ersten Torsionsstab 10 verbunden, während die beiden Torsionsstäbc am ersten axialen Ende sich gegeneinander verdrehen können. Am ersten axialen Ende ist der zweite Torsionsstab 12 verlängert ausgeführt und mit einer zweiten Sperrverzahnung 6' versehen.

Auf diese Weise lassen sich durch selektive Blockierung der beiden Sperrverzahnungen 6, 6' zwei unterschiedliche Schaltzustände erhalten, die zusammen mit dem sich durch Zusammenwirken der beiden Torsionsstäbe 10, 12 ergebenden Variation der Kennlinie dazu benutzt werden können, die Gurtbandabzugskraft an die jeweiligen Anforderungen frei anzupassen. In einem ersten Schaltzustand, in welchem die Sperrverzahnung 6 blockiert ist, ist lediglich der erste Torsionsstab 10 aktiv. Das Widerstandsdrehmoment wird also ausschließlich von dem Torsionswiderstandsmoment des ersten Torsionsstabes 10 bestimmt. In einem zweiten Schaltzustand, in welchem die Sperrverzahnung 6 freigegeben ist, jedoch die Sperrverzahnung 6' blockiert ist, sind die beiden Torsionsstäbe 10, 12 in Reihe geschaltet. Es ergibt sich somit ein niedrigeres Widerstandsdrchmoment als im ersten Schaltzustand.

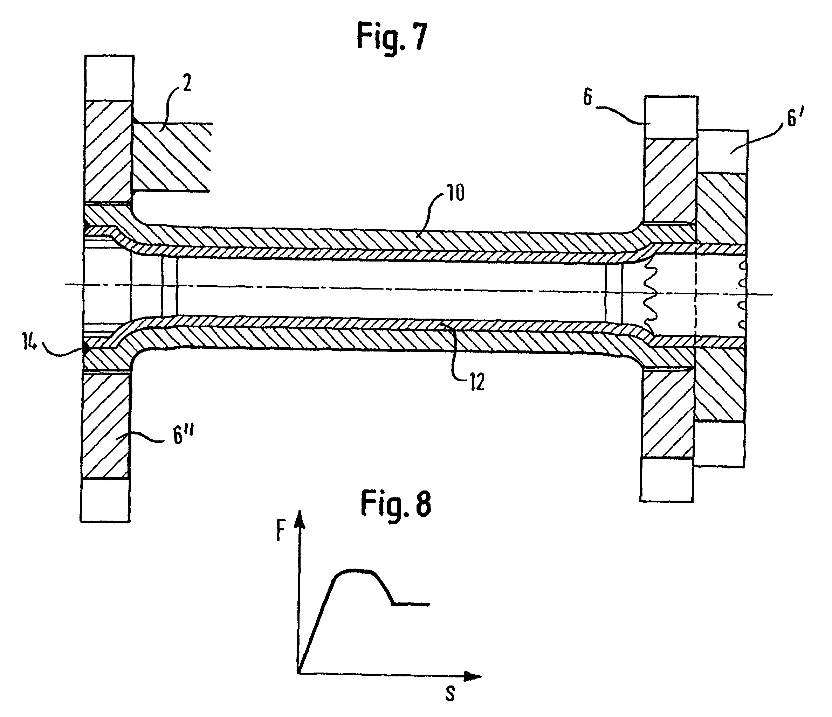

In Fig. 7 ist eine weitere Baugruppe gezeigt, um das Verständnis der Erfindung zu erleichtern. Hier sind die beiden Torsionsstäbc 10, 12 am ersten axialen Ende fest miteinander verbunden. Ferner ist an diesem Ende eine dritte Sperrverzahnung 6" vorgesehen. Schließlich ist mit diesem Ende der beiden Torsionsstäbe auch die Gurtspule 2 drehfest verbunden.

An dem zweiten axialen Ende können sich die beiden Torsionsstäbe 10, 12 relativ zueinander verdrehen. An dem ersten Torsionsstab 10 ist eine erste Sperrverzahnung 6 vorgesehcn, und am zweiten Torsionsstab 12 ist eine zweite Sperrverzahnung 6' vorgesehen.

Dies erlaubt zwei Schaltzustände zur Kraftbegrenzung; die entsprechende Kennlinie ist in Fig. 8 gezeigt. In einem ersten Zustand, der zu einer hohen Gurtbandabzugskraft führt, sind die beiden Torsionsstäbe 10, 12 parallelgeschaltet, indem die beiden Sperrverzahnungen 6, 6' blockiert werden. In einem zweiten Schaltzustand ist nur einer der Torsionsstäbe aktiv; die zu dem entsprechenden anderen Torsionsstab gehörige Sperrverzahnung wird nicht blockiert.

Die dritte Sperrverzahnung 6" dient dazu, die Kraftbegrenzungsfunktion nach einem vorbestimmten Drehwinkel der Gurtspule zu deaktivieren. Zu diesem Zweck wird eine in den Figuren nicht dargestellte Blockierklinke in die dritte Sperrverzahnung 6" eingesteuert, wodurch die Gurtspule 2 unmittelbar blockiert wird. Auf diese Weise kann kein Gurtband mehr von der Gurtspule abgezogen werden. Somit kann beispielsweise der maximal zulässige Drehwinkel der Gurtspule auf 400° begrenzt werden, um zu verhindern, daß derart viel Gurtband von der Gurtspule abgezogen wird, daß der zurückzuhaltende Fahrzeuginsasse sich übermäßig weit nach vorne bewegen kann.

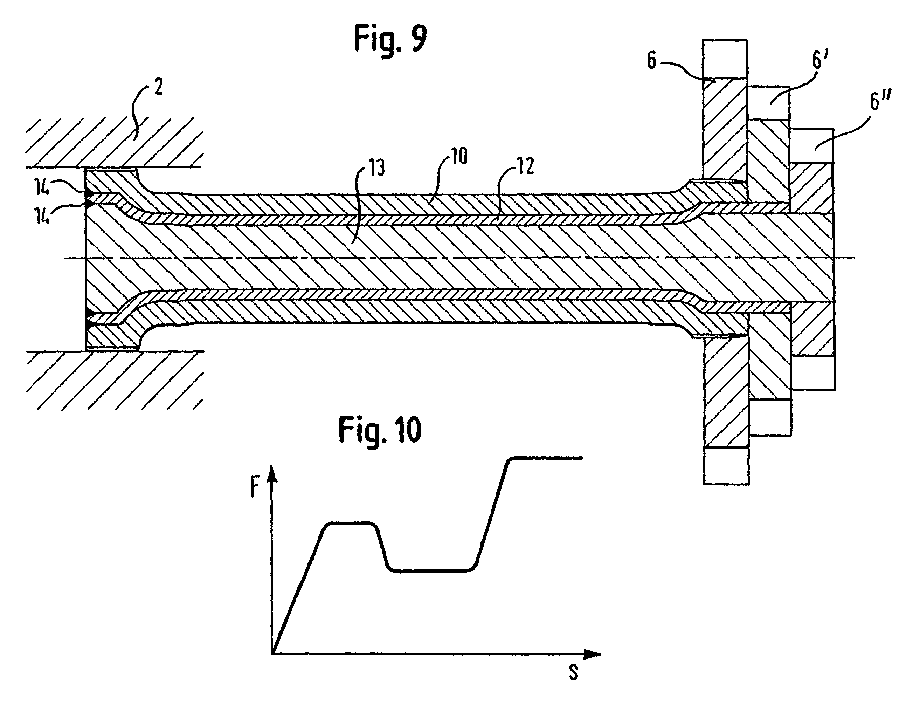

In Fig. 9 ist eine weitere Baugruppe gezeigt. Hier werden drei Torsionsstäbe verwendet, wobei der erste Torsionsstab 10 und der zweite Torsionsstab 12 hohl sind und der dritte Torsionsstab 13 als massiver Torsionsstab ausgebildet ist, der im Inneren des zweiten Torsionsstabes 12 angeordnet ist. Alle drei Torsionsstäbc sind an ihrem ersten axialen Ende drehfest miteinander und drehfest mit der Gurtspule 2 verbunden. An dem zweiten axialen Ende können sich die Torsionsstäbe relativ zueinander verdrehen. An diesem Ende ist jeder Torsionsstab mit einer Sperrverzahnung 6, 6' beziehungsweise 6" versehen.

Mit dieser Baugruppe lassen sich durch die unterschiedliche Kombination der jeweils wirksamen Torsionsstäbe die verschiedensten Kennlinien erzielen. Ein Beispiel ist in Fig. 10 gezeigt: in einer ersten Phase werden zwei Torsionsstäbe verwendet, so daß sich ein mittleres Kraftniveau ergibt. In einer sich daran anschließenden zweiten Phase ist nur noch ein Torsionsstab aktiv, so daß sich ein verringertes Kraftniveau ergibt. Schließlich werden alle drei Torsionsstäbe aktiviert, so daß sich ein hohes Kraftniveau ergibt. Eine solche Kennlinie ist grundsätzlich wünschenswert. Während der ersten Phase, in der der Fahrzeuginsasse ausschließlich vom Sicherheitsgurt zurückgehalten wird, soll die Gurtbandabzugskraft gerade so hoch sein, daß Verletzungen des Fahrzeuginsassen ausgeschlossen werden können, jedoch eine hohe Verzögerung des Fahrzeuginsassen erzielt wird. In einer zweiten Phase, in welcher der Fahrzeuginsasse in einen vor ihm entfalteten Gassack eintaucht, sollte die Gurtbandabzugskraft absinken, da ansonsten zusammen mit der vom Gassack auf den Oberkörper ausgeübten Belastung ein Belastungsniveau erreicht würde, bei welchem Verletzungen nicht ausgeschlossen werden könnten. In einer dritten Phase ist schließlich eine hohe Gurtbandabzugskraft wünschenswert, um zu verhindern, daß der Fahrzeuginsasse sich übermäßig weit nach vorne verlagert und beispielsweise den Gassack durchschlägt.

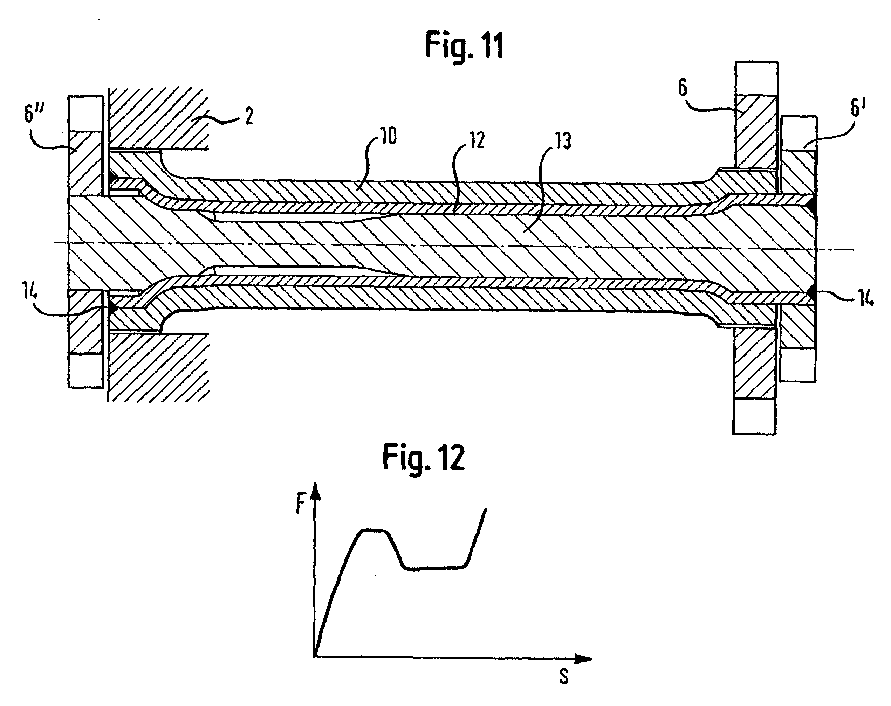

In Fig. 11 ist eine weitere Baugruppe gezeigt. Auch hier werden drei ineinander angeordnete Torsionsstäbe 10, 12, 13 verwendet. Der erste Torsionsstab 10 ist an seinem ersten axialen Ende drehfest mit der Gurtspule 2 und mit dem zweiten Torsionsstab 12 verbunden. An seinem zweiten axialen Ende ist der Torsionsstab 10 mit einer Sperrverzahnung 6 versehen. Der zweite Torsionsstab 12 ist an seinem zweiten axialen Ende mit einer Sperrverzahnung 6' versehen sowie drehfest mit dem dritten Torsionsstab 13 verbunden. Der Torsionsstab 13 ist massiv ausgeführt und an seinem ersten axialen Ende, an welchem er sich frei relativ zum zweiten Torsionsstab 12 drehen kann, mit einer dritten Sperrverzahnung 6" versehen. Ferner ist der dritte Torsionsstab 13 in einem Bereich zwischen seinem ersten axialen Ende und seiner Mitte mit verringertem Querschnitt ausgeführt, so daß der zweite Torsionsstab 12 in diesem Bereich nicht unmittelbar auf dem dritten Torsionsstab 13 aufliegt.

Auch hier läßt sich ein Verlauf der Kennlinie erzielen, wie er von Fig. 8 bezüglich der dort gezeigten Baugruppen bekannt ist. Ein mittleres Kraftniveau läßt sich erzielen, indem beispielsweise die Sperrverzahnung 6 blockiert wird. In diesem Fall ist nur der erste Torsionsstab 10 aktiv. Alternativ könnte die zweite Sperrverzahnung 6' blockiert werden, während die erste Sperrverzahnung 6 freigegeben ist. In diesem Fall wäre lediglich der zweite Torsionsstab 12 aktiv. Ein verringertes Kraftniveau läßt sich dann erzielen, indem lediglich die dritte Sperrverzahnung 6" blockiert wird, während die erste und die zweite Sperrverzahnung 6, 6' freigegeben sind. In diesem Fall sind der zweite und der dritte Torsionsstab 12, 13 in Reihe geschaltet. Ein hohes Kraftniveau läßt sich anschließend erzielen, indem die beiden Sperrverzahnungen 6, 6' blockiert werden, so daß die beiden Torsionsstäbe 10, 12 parallelgeschaltet aktiv sind.

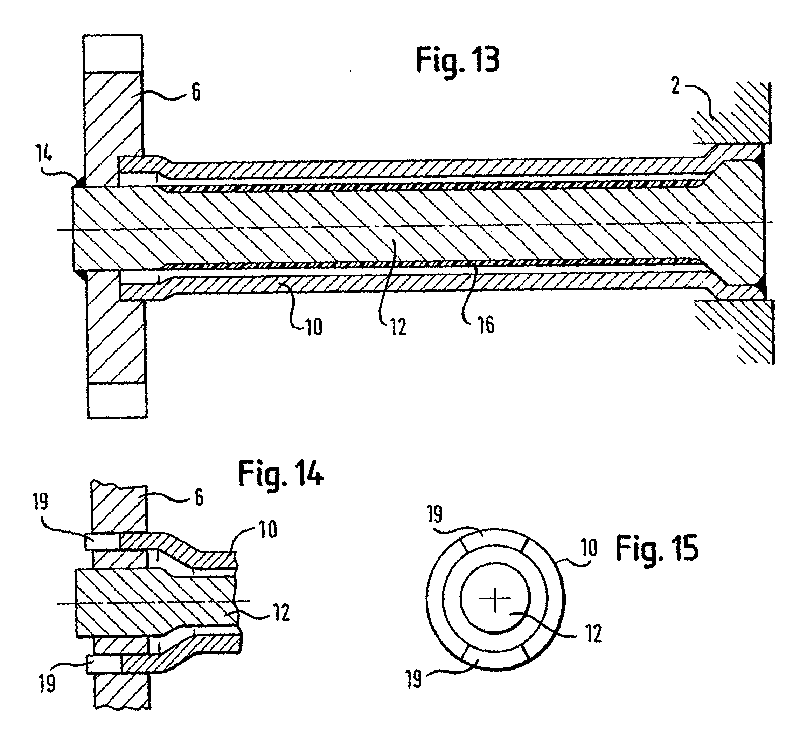

In Fig. 13 ist eine Baugruppe gemäß einer dritten Ausführungsform der Erfindung gezeigt. Ähnlich wie bei der Baugruppe gemäß der zweiten Ausführungsform werden ein erster Torsionsstab 10 und einer zweiter Torsionsstab 12 verwendet, wobei zwischen den beiden Torsionsstäben ein Zwischenraum vorgesehen ist. Zusätzlich ist auf der Außenfläche des zweiten Torsionsstabes 12 eine Kunststoffbeschichtung 16 aufgebracht, die bezüglich des ersten Torsionsstabes 10 als Gleitoberfläche wirkt und ein Kaltverschweißen der beiden Torsionsstäbe bei Belastung vermeidet. Anstelle der Kunststoffbeschichtung könnte auch eine Federstahlauflage verwendet werden. Die beiden Torsionsstäbe 10, 12 sind an ihrem zweiten axialen Ende drehfest miteinander sowie mit der Gurtspule 2 verbunden. An dem ersten axialen Ende ist der zweite Torsionsstab 12 drehfest mit der Sperrverzahnung 6 verbunden. Dies ist hier wieder durch eine Schweißnaht 14 symbolisicrt. Der erste Torsionsstab 10 ist an seinem ersten axialen Ende drehfest, jedoch in axialer Richtung verschiebbar in der Sperrverzahnung 6 aufgenommen. Zu diesem Zweck kann beispielsweise eine Keilverzahnung verwendet werden.

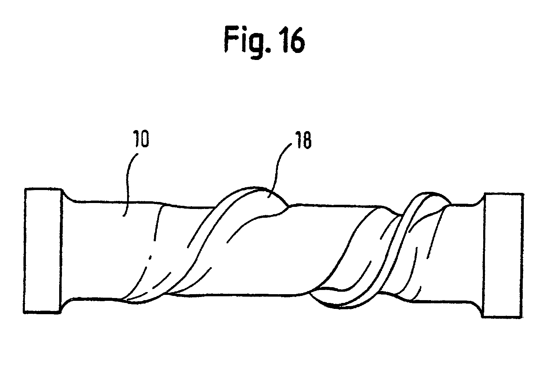

Wenn nun zwischen der Sperrverzahnung 6 und der Gurtspule 2 ein Drehmoment wirkt, sind zunächst die beiden Torsionsstäbe 10, 12 parallelgeschaltet aktiv. Aufgrund des Zwischenraumes zwischen der Innenfläche des ersten Torsionsstabes 10 und der von der Kunststoffbeschichtung 16 bereitgestellten Gleitfläche auf dem zweiten Torsionsstab 12 beginnt der erste Torsionsstab 10 ab einem vorbestimmten Drehwinkel, unter Bildung einer schraubenförmig verlaufenden Falte 18 (siehe Fig. 16) zu kollabieren. Er stützt sich dabei auf der Kunststoffbeschichtung 16 ab, die verhindert, daß es zu einem metallischen Kontakt zwischen den beiden Torsionsstäben und somit zu einer erhöhten Reibung zwischen diesen kommt, wie sie beispielsweise durch punktuelle Kaltverschweißungen hervorgerufen werden könnte. Durch die auftretende Falte 18 verkürzt sich der erste Torsionsstab 10 so weit, daß er an seinem ersten axialen Ende aus der Sperrverzahnung 6 herausrutscht. In diesem Zustand ist nur noch der zweite Torsionsstab 12 aktiv.

Die auftretende Falte wird besonders beeinflußt von den gewählten Abmessungen. Als vorteilhaft hat sich für die Dicke A des Spaltes zwischen der Kunststoffbeschichtung 16 und der Innenfläche des ersten Torsionsstabes 10 ein Wert von 0,5 bis 1,5 mm herausgestellt. Der Durchmesser des zweiten Torsionsstabes ergibt sich aus dem gewünschten Torsionswiderstandsmoment; übliche Durchmesser betragen zwischen etwa 8 mm und etwa 13 mm. Das gleiche gilt für die Wandstärke des ersten Torsionsstabes, die vom gewählten Durchmesser abhängt; die Wandstärke beträgt üblicherweise zwischen 0,3 mm und 2 mm.

In den Fig. 14 und 15 ist eine Variante zur dritten Ausführungsform gezeigt. Bei dieser Variante werden fingerartige Vorsprünge 19 am ersten axialen Ende des ersten Torsionsstabes 10 verwendet. Diese Finger greifen in entsprechende Aussparungen in der Sperrverzahnung 6 ein. Durch die Wahl der axialen Länge der Vorsprünge 19 kann der Winkel bestimmt werden, bei dem der erste Torsionsstab 10 soweit verkürzt ist, daß er aus der Sperrverzahnung 6 herausrutscht.

## Patentansprüche

1. Baugruppe bestehend aus mindestens zwei Torsionsstäben (10, 12) zur Kraftbegrenzung bei einem Gurtaufroller, wobei der erste Torsionsstab (10) hohl ist und der zweite Torsionsstab (12) im Inneren des ersten Torsionsstabes (10) angeordnet ist,
**dadurch gekennzeichnet, daß** das maximal vom ersten Torsionsstab (10) übertragbare Drehmoment sich von dem vom zweiten Torsionsstab (12) maximal übertragbaren Drehmoment unterscheidet, so daß bei zunehmender Belastung einer der beiden Torsionsstäbe abschert und der verbleibende Torsionsstab allein an der Drehmomentübertragung beteiligt ist.

2. Baugruppe bestehend aus mindestens zwei Torsionsstäben (10, 12) zur Kraftbegrenzung bei einem Gurtaufroller, wobei der erste Torsionsstab (10) hohl ist und der zweite Torsionsstab (12) im Inneren des ersten Torsionsstabes (10) angeordnet ist und wobei der Innendurchmesser des ersten Torsionsstabs (10) und ein Abstand zur Oberfläche des zweiten Torsionsstabs (12) im nicht tordierten Zustand der Torsionsstäbe wenigstens teilweise so gewählt sind, daß der erste Torsionsstab (10) mindestens im tordiertem Zustand und mindestens in einem Abschnitt diesen Abstand überwinden kann,
**dadurch gekennzeichnet, daß** einer der beiden Torsionsstäbe (10, 12) an einem axialen Ende axial verschiebbar in einer Aufnahme drehfest aufgenommen ist, so daß er sich bei zunehmender Belastung verkürzen und aus der Aufnahme herausrutschen kann, wodurch der verbleibende Torsionsstab allein an der Drehmomentübertragung beteiligt ist.

3. Baugruppe nach einem der vorhergehenden Ansprüche, **dadurch gekennzeichnet, daß** auch der zweite Torsionsstab (12) hohl ist und ein dritter Torsionsstab (13) vorgesehen ist, der im Inneren des zweiten Torsionsstabes (12) angeordnet ist.

4. Baugruppe nach Anspruch 3, **dadurch gekennzeichnet, daß** alle drei Torsionsstäbe (10, 12, 13) an einem axialen Ende drehfest miteinander verbunden sind und daß am anderen axialen Ende jedes Torsionsstabes eine Sperrverzahnung (6, 6', 6") vorgesehen ist.

5. Baugruppe nach Anspruch 3, **dadurch gekennzeichnet, daß** der erste und der zweite Torsionsstab (10, 12) an einem ersten axialen Ende fest miteinander verbunden sind, daß der zweite und der dritte Torsionsstab (12, 13) an dem anderen, zweiten axialen Ende fest miteinander verbunden sind, daß am zweiten axialen Ende des ersten und des zweiten Torsionsstabes (10, 12) jeweils eine Sperrverzahnung (6,6') vorgesehen ist und daß am ersten axialen Ende des dritten Torsionsstabes (13) eine Sperrverzahnung (6") vorgesehen ist.

6. Baugruppe nach einem der vorhergehenden Ansprüche, **dadurch gekennzeichnet, daß** zwischen der Innenwand des ersten Torsionsstabes (10) und der Außenwand des zweiten Torsionsstabes (12) ein kreiszylindrischer Zwischenraum vorgehen ist und daß auf der Außenwand des zweiten Torsionsstabes (12) eine Gleitoberfläche (16) ausgebildet ist.

7. Baugruppe nach Anspruch 6, **dadurch gekennzeichnet, daß** die Gleitoberfläche durch eine Kunststoffbeschichtung (16) auf dem zweiten Torsionsstab (12) gebildet ist.

8. Baugruppe nach einem der Ansprüche 3 bis 5, **dadurch gekennzeichnet, daß** am dritten Torsionsstab (13) eine Einschnürung vorgesehen ist.

9. Baugruppe nach einem der Ansprüche 1 bis 8, **dadurch gekennzeichnet, daß** einer der Torsionsstäbe (10, 12) mit einer Einkerbung versehen ist.

10. Baugruppe nach einem der vorhergehenden Ansprüche, **dadurch gekennzeichnet, daß** sich der erste Torsionsstab (10) mindestens im tordierten Zustand am zweiten Torsionsstab (12) abstützt.

11. Gurtaufroller für einen Fahrzeug-Sicherheitsgurt, enthaltend eine Baugruppe nach einem der vorhergehenden Ansprüche.

## Claims

1. A unit comprising at least two torsion bars (10, 12) for limiting the force in a belt retractor, the first torsion bar (10) being hollow and the second torsion bar (12) being arranged in the interior of the first torsion bar (10),
**characterized in that** the torque which can be transmitted as a maximum by the first torsion bar (10) differs from the torque which can be transmitted as a maximum by the second torsion bar (12), so that with increasing loading one of the two torsion bars shears off and only the remaining torsion bar is involved in transmitting the torque.

2. A unit comprising at least two torsion bars (10, 12) for limiting the force in a belt retractor, the first torsion bar (10) being hollow and the second torsion bar (12) being arranged in the interior of the first torsion bar (10), and the inner diameter of the first torsion bar (10) and a distance from the surface of the second torsion bar (12) in the non-torsioned condition of the torsion bars being at least in part selected such that at least a portion of the first torsion bar (10) can overcome this distance at least in the torsioned condition,
**characterized in that** one of the two torsion bars (10, 12) at one axial end is axially shiftably and non-rotatably received in a mount, so that it may shorten with increasing loading and slip out of the mount, as a result of which only the remaining torsion bar is involved in transmitting the torque.

3. The unit as set forth in either of the preceding claims, **characterized in that** also the second torsion bar (12) is hollow and a third torsion bar (13) is provided arranged in the interior of the second torsion bar (12).

4. The unit as set forth in claim 3, **characterized in that** all three torsion bars (10, 12, 13) are non-rotatably connected to each other at one axial end, and that a locking toothing (6, 6', 6") is provided at the other axial end of each torsion bar.

5. The unit as set forth in claim 3, **characterized in that** the first and the second torsion bar (10, 12) are firmly connected to each other at a first axial end, that the second and the third torsion bar (12, 13) are firmly connected to each other at the other, second axial end, that one locking toothing (6, 6') each is provided at the second axial ends of the first and the second torsion bar (10, 12) and that a locking toothing (6") is provided at the first axial end of the third torsion bar (13).

6. The unit as set forth in any of the preceding claims, **characterized in that** a right-cylindrical interspace is provided between the inner wall of the first torsion bar (10) and the outer wall of the second torsion bar (12) and that a sliding surface (16) is configured on the outer wall of the second torsion bar (12).

7. The unit as set forth in claim 6, **characterized in that** the sliding surface is formed by a plastics coating (16) on the second torsion bar (12).

8. The unit as set forth in any of claims 3 to 5, **characterized in that** the third torsion bar (13) is provided with a constriction.

9. The unit as set forth in any of claims 1 to 8, **characterized in that** one of the torsion bars (10, 12) is provided with a notch.

10. The unit as set forth in any of the preceding claims, **characterized in that** the first torsion bar (10) is supported at least in the torsioned condition by the second torsion bar (12).

11. A belt retractor for a vehicle seat belt, comprising a unit as set forth in any of the preceding claims.

## Revendications

1. Ensemble constitué par au moins deux barres de torsion (10, 12) pour limiter la force sur un enrouleur de ceinture, la première barre de torsion (10) étant creuse et la deuxième barre de torsion (12) étant agencée à l'intérieur de la première barre de torsion (10),
**caractérisé en ce que** le couple de rotation transmissible au maximum par la première barre de torsion (10) se distingue du couple de rotation transmissible au maximum par la deuxième barre de torsion (12) de telle sorte qu'en cas de sollicitation croissante, une des deux barres de torsion cisaille, et seule la barre de torsion subsistante participe à la transmission du couple de rotation.

2. Ensemble constitué par au moins deux barres de torsion (10, 12) pour limiter la force sur un enrouleur de ceinture, la première barre de torsion (10) étant creuse et la deuxième barre de torsion (12) étant agencée à l'intérieur de la première barre de torsion (10), et le diamètre intérieur de la première barre de torsion (10) et une distance par rapport à la surface de la deuxième barre de torsion (12) à l'état non tordu des barres de torsion sont choisis au moins partiellement de telle sorte qu'au moins dans un tronçon, la première barre de torsion (10) peut surmonter cette distance au moins à l'état tordu,
**caractérisé en ce que** l'une des deux barres de torsion (10, 12), à une extrémité axiale, est reçue en déplacement axial et solidaire en rotation dans un logement de sorte qu'en cas de sollicitation croissante, elle peut se raccourcir et glisser hors du logement, en raison de quoi seule la barre de torsion subsistante participe à la transmission du couple de rotation.

3. Ensemble selon l'une des revendications précédentes, **caractérisé en ce que** la deuxième barre de torsion (12) aussi est creuse, et **en ce qu'**il est prévu une troisième barre de torsion (13) qui est agencée à l'intérieur de la deuxième barre de torsion (12).

4. Ensemble selon la revendication 3, **caractérisé en ce que** les trois barres de torsion (10, 12, 13) sont reliées les unes aux autres de manière solidaire en rotation à une extrémité axiale et **en ce qu'**à l'autre extrémité axiale de chaque barre de torsion, il est prévu une denture de blocage (6, 6', 6").

5. Ensemble selon la revendication 3, **caractérisé en ce que** les première et deuxième barres de torsion (10, 12) sont reliées de manière solidaire à une première extrémité axiale, **en ce que** les deuxième et troisième barres de torsion (12, 13) sont reliées l'une à l'autre de manière solidaire à l'autre, la deuxième extrémité axiale, **en ce qu'**à la deuxième extrémité axiale des première et deuxième barres de torsion (10, 12) est prévue une denture de blocage (6, 6') respective, et **en ce qu'**à la première extrémité axiale de la troisième barre de torsion (13) est prévue une denture de blocage (6").

6. Ensemble selon l'une des revendications précédentes, **caractérisé en ce qu'**il est prévu entre la paroi intérieure de la première barre de torsion (10) et la paroi extérieure de la deuxième barre de torsion (12) un espace intermédiaire cylindrique circulaire et **en ce que** sur la paroi extérieure de la deuxième barre de torsion (12) est réalisée une surface de glissement (16).

7. Ensemble selon la revendication 6, **caractérisé en ce que** la surface de glissement est formée par un revêtement en matière plastique (16) sur la deuxième barre de torsion (12).

8. Ensemble selon l'une des revendications 3 à 5, **caractérisé en ce qu'**un étranglement est prévu sur la troisième barre de torsion (13).

9. Ensemble selon l'une des revendications 1 à 8, **caractérisé en ce qu'**une des barres de torsion (10, 12) est pourvue d'une entaille.

10. Ensemble selon l'une des revendications précédentes, **caractérisé en ce que** la première barre de torsion (10) prend appui sur la deuxième barre de torsion (12) au moins à l'état tordu.

11. Enrouleur de ceinture pour une ceinture de sécurité de véhicule, comprenant un ensemble selon l'une des revendications précédentes.
